# EUROPÄISCHE PATENTANMELDUNG

(11) **EP 1 279 637 A2**
(43) Veröffentlichungstag der Anmeldung: **29.01.2003**
(21) Anmeldenummer: 02016187.3
(22) Anmeldetag: 20.07.2002
(51) Int. Cl.: B65H 75/44

(54) **Aufroller**

(30) Priorität: 27.07.2001 DE 10136761
(71) Anmelder: Rapid Maschinenfabrik GmbH, 64347 Griesheim (DE)
(72) Erfinder: Kloberdanz, Hermann, Dr., 63589 Linsengericht (DE); Wesp, Alexander, 64285 Darmstadt (DE); Wolf, Gert, Dipl.-Ing., 64297 Darmstadt (DE)
(74) Vertreter: Gornott, Dietmar, Dipl.-Ing.

(57) **Zusammenfassung**

Bei einem Aufroller für wickelfähige Objekte mit einer das Objekt aufnehmenden Trommel, wobei das ausgezogene Objekt durch Federkraft nach Aufhebung einer Sperre automatisch aufgerollt wird, ist eine richtungsabhängige Bremsvorrichtung derart vorgesehen, dass die Bremswirkung beim Aufrollen des Objekts größer als beim Abrollen ist.

## Beschreibung

Die Erfindung betrifft einen Aufroller für wickelfähige Objekte mit einer das Objekt aufnehmenden Trommel, wobei das ausgezogene Objekt durch Federkraft nach Aufhebung einer Sperre automatisch aufgerollt wird.

Insbesondere für Druckluftschläuche werden unter anderem in Werkstätten Schlauchaufroller verwendet, bei denen der Schlauch durch Ziehen am Schlauchende gegen die Kraft einer Aufrollfeder abgerollt wird. Damit die Benutzung des Schlauchs bzw. des daran angeschlossenen Werkzeugs nicht bei gespanntem Schlauch erfolgt, ist eine Sperrklinke vorgesehen, die ein selbstätiges Aufrollen des Schlauchs verhindert. Durch ein wiederholtes Ziehen am Schlauch wird die Sperrklinke gelöst, so dass der Schlauch mit Hilfe der gespannten Feder aufgerollt wird. Um ein sicheres Aufrollen des gesamten Schlauchs zu ermöglichen, ist eine entsprechend starke Feder erforderlich, wobei jedoch im abgerollten Zustand ein wesentlich größeres Aufrollmoment vorliegt. Wird der Schlauch im abgerollten Zustand losgelassen, so kann er eine beachtliche Geschwindigkeit erreichen und stellt eine Unfallgefahr dar.

Aufgabe der vorliegenden Erfindung ist es, eine solche Unfallgefahr zu vermeiden. Diese Aufgabe wird erfindungsgemäß dadurch gelöst, dass eine richtungsabhängige Bremsvorrichtung derart vorgesehen ist, dass die Bremswirkung beim Aufrollen des Objekts größer als beim Abrollen ist. Die erfindungsgemäßen Maßnahmen bewirken, dass trotz der Begrenzung der Aufrollgeschwindigkeit ein zügiges Abrollen möglich ist.

Außer für Druckluftschläuche kann die Erfindung auch für andere wickelfähige Objekte, wie beispielsweise andere Schläuche, Elektrokabel, Seile, Bänder und Ketten, angewendet werden.

Eine erste vorteilhafte Ausgestaltung des erfindungsgemäßen Aufrollers besteht darin, dass die Bremsvorrichtung zwischen einer festen Halterung für die Trommel und der Trommel selbst wirksam ist. Diese Ausgestaltung und insbesondere deren im folgenden genannten Weiterbildungen ermöglichen eine kompakte platzsparende Konstruktion der richtungsabhängigen Bremsvorrichtung unter Beibehaltung der Gestaltungsmerkmale bekannter Aufroller.

Eine erste Weiterbildung dieser Ausgestaltung besteht darin, dass an der festen Lagerung ein Freilauf angeordnet ist mit einem festen und einem in einer Richtung drehbaren Teil, dessen drehbarer Teil mit der Bremse verbunden ist. Dabei ist vorzugsweise vorgesehen, dass die Bremse eine Reibungsbremse mit einer einstellbaren Bremskraft ist und dass die Reibungsbremse aus einer Bremsscheibe und aus mit Hilfe von Federn angepressten Bremsbacken besteht.

Zur Einstellung der Bremskraft kann vorgesehen sein, dass der Andruck der Bremsbacken mit mehreren am Umfang angeordneten Schrauben und Muttern einstellbar ist oder dass zur Einstellung der Bremskraft ein zylinderförmiges Gehäuse geteilt ist, wobei die Teilung mit einem Gewinde erfolgt und das deckelförmige eine Teil gegenüber dem anderen radial durch Drehung verstellbar ist und als Widerlager für die Federn dient. Letztere Ausführungsform ermöglicht eine besonders einfache Einstellung der Bremskraft. Außerdem schützt das Gehäuse vor möglichen Verletzungen durch die beim Ab- und Aufrollen um die Achse rotierenden Einstellschrauben.

Eine andere Weiterbildung ermöglicht eine geschwindigkeitsabhängige Bremswirkung und damit eine bessere Stabilisierung der Aufrollgeschwindigkeit dadurch, dass die Bremsvorrichtung eine Viskobremse ist. Diese Weiterbildung ermöglicht eine kompakte Bauform insbesondere dadurch, dass ein scheibenförmiges Gehäuse an seinem Umfang mit der Trommel verbunden; mit Flüssigkeit gefüllt und im mittleren Bereich gegenüber einem ringförmigen Freilauf drehbar abgedichtet ist und dass eine im Gehäuse verlaufende Bremsscheibe verdrehfest am Freilauf befestigt ist.

Da die Viskosität der bekannten in Frage kommenden Flüssigkeiten temperaturabhängig ist, kann eine Einstellung der Bremskraft erforderlich sein. Hierzu ist bei einer vorteilhaften Ausgestaltung vorgesehen, dass die Bremsscheibe asymmetrisch ausgebildet ist und dass ihre Drehstellung einstellbar ist.

Alternativ kann bei der Viskobremse vorgesehen sein, dass ein scheibenförmiges Gehäuse an der festen Halterung befestigt und mit Flüssigkeit gefüllt ist und dass eine im Gehäuse verlaufende Bremsscheibe über eine gemeinsame Welle mit der Trommel verbunden ist.

Eine andere Weiterbildung mit einer geschwindigkeitsabhängigen Bremskraft besteht darin, dass die Bremsvorrichtung eine fliehkraft-betätigte Bandbremse ist. Hierbei ist eine kompakte und zuverlässige Bauform dadurch möglich, dass die Bandbremse eine Differenzialbandbremse ist, wobei zwei jeweils als Hebel ausgebildete Fliehgewichte mit einer Koppelstange 54' verbunden sind und an einem der Fliehgewichte im unterschiedlichen Abstand zu einem Drehpunkt die Enden eines Bremsbandes befestigt sind.

Bei einer anderen Weiterbildung der ersten Ausgestaltung ist vorgesehen, dass die Bremsvorrichtung eine Zahnradpumpe ist mit einem Flüssigkeitskreislauf, dessen Strömungswiderstand mit einer Drossel einstellbar ist, und dass parallel zur Drossel ein Rückschlagventil vorgesehen ist. Diese Weiterbildung zeichnet sich sowohl durch ihre kompakte Bauform als auch dadurch aus, dass nur wenige bewegliche Teile benötigt werden und kein separater Freilauf erforderlich ist.

Die erste Ausgestaltung kann auch dadurch weiter gebildet werden, dass die Bremsvorrichtung eine visko-betätigte Bandbremse ist. Eine kompakte Bauform kann bei dieser Weiterbildung dadurch erzielt werden, dass ein scheibenförmiges Gehäuse über einen Exzenter und eine Schubstange mit dem Bremshebel einer Bandbremse verbunden und mit Flüssigkeit gefüllt ist.

Eine andere Weiterbildung der ersten Ausgestaltung ermöglicht ein schnelles Einsetzen der Bremskraft dadurch, dass die Bremsvorrichtung mindestens zwei rotierende Fliehgewichte aufweist, welche mit Bremselementen derart verbunden sind, dass eine Bremskraft in Abhängigkeit von der Drehgeschwindigkeit und der Drehbeschleunigung erzeugt wird. Vorzugsweise ist dabei vorgesehen, dass die Bremselemente Bremsbacken sind.

Eine vorteilhafte Ausbildung dieser Weiterbildung besteht darin, dass von mindestens zwei am Umfang verteilten Bremselementen zwei sich gegenüberstehende Lager zweier benachbarter Bremselemente derart ausgebildet sind, dass ein Lager ein Festlager und das andere ein Loslager ist und dass zwischen den Lagern ein Keil angeordnet ist, der mit dem jeweiligen Fliehgewicht radial und tangential verschiebbar ist. Vorzugsweise sind dabei die Fliehgewichte auf jeweils einer radialen Führung angeordnet und werden von Federn in Richtung auf die Achse gezogen.

Zum Zurückziehen von zwei diametral entgegengesetzten Fliehgewichten kann ein aus zwei Kniehebeln bestehendes Gestänge vorgesehen sein, wobei am Gelenk zwischen zwei jeweils einen Kniehebel bildenden Stangen je eine Feder angreift. Dabei ist es vorteilhaft, wenn die Fliehgewichte außerhalb der Bremstrommel angeordnet sind.

Eine zweite Ausgestaltung der Erfindung besteht darin, dass die Bremsvorrichtung von zwei das Objekt umfassenden Bremsrollen gebildet ist, deren Achsen derart schwenkbar angeordnet sind, dass beim Aufrollen des Objekts die Bremsrollen gegen das Objekt gedrückt und beim Abrollen freigegeben werden und dass die Bremsrollen jeweils eine Bremse aufweisen. Diese Ausgestaltung hat den Vorteil, dass ein nachträglicher Anbau an bestehende Aufroller in einfacher Weise möglich ist, sofern die räumlichen Voraussetzungen gegeben sind. Hierbei kann auch wiederum vorgesehen sein, dass die Bremsen Viskobremsen sind. Die Bremsrollen können in seitlichen Bereichen der Mantelfläche mit hervorstehenden Ringen versehen sein, die ein Quetschen des Objekts beim Bremsvorgang verhindern.

Um einen zuverlässigen Andruck der Bremsrollen von beiden Seiten auf das Objekt zu ermöglichen, kann bei dieser Ausgestaltung vorgesehen sein, dass die Bremsrollen jeweils auf zwei Blecharmen montiert sind, die durch eine Stift/Langlochverbindung derart gekoppelt sind, dass sie jeweils den gleichen Winkel zum Objekt bilden.

Ferner hat es sich bei dieser Ausgestaltung als vorteilhaft erwiesen, wenn die Bremsvorrichtung zur Anpassung an den Füllzustand der Trommel kippbar gelagert ist.

Die Erfindung läßt zahlreiche Ausführungsformen zu. Einige davon sind schematisch in der Zeichnung anhand mehrerer Figuren dargestellt und nachfolgend beschrieben. Es zeigt:
- Fig. 1 und Fig. 2: ein erstes Ausführungsbeispiel mit einer Reibungsbremse,
- Fig. 3 und Fig. 4: ein zweites Ausführungsbeispiel mit einer Reibungsbremse,
- Fig. 5 bis Fig. 7: ein Ausführungsbeispiel mit einer Viskobremse,
- Fig. 8: ein Detail zur Einstellung der Bremskraft bei einer Viskobremse,
- Fig. 9 bis Fig. 11: ein Ausführungsbeispiel mit einer fliehkraft-betätigten Bandbremse,
- Fig. 12 bis Fig. 14: ein Ausführungsbeispiel mit einer Zahnradbremse,
- Fig. 15 bis Fig. 17: ein Ausführungsbeispiel mit einer visko-betätigten Bandbremse,
- Fig. 18 bis Fig. 21: ein Ausführungsbeispiel mit einer Schlauchbremse und
- Fig. 22 und Fig. 23: ein Ausführungsbeispiel mit einer fliehkraft-betätigten Backenbremse.

Gleiche Teile und bezüglich ihrer Funktion im wesentlichen gleiche Teile sind in den Figuren mit gleichen Bezugszeichen versehen.

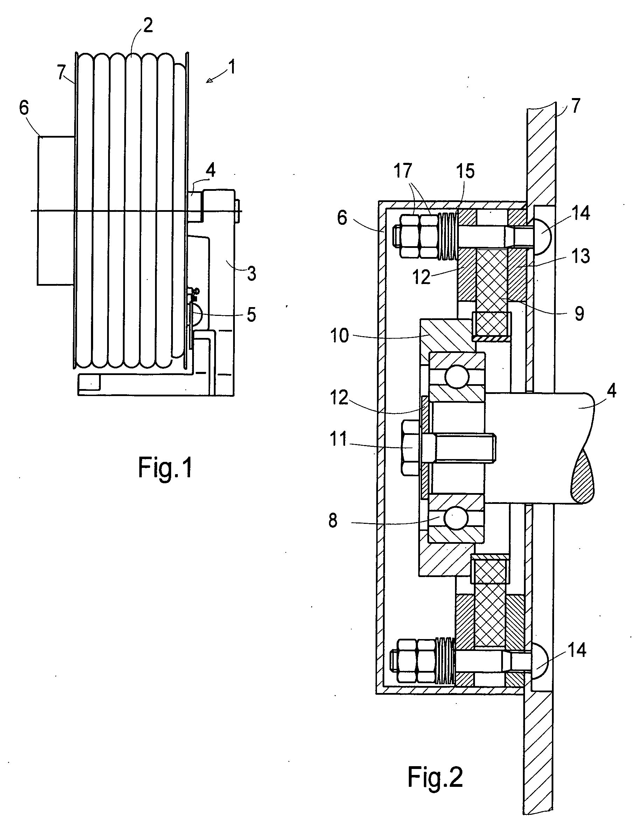

Bei den Ausführungsbeispielen nach den Figuren 1 bis 4 wird eine Schlauchhaspel 1 mit einem Schlauch 2 von einem Ständer 3 gehalten, an welchem eine Achse 4 verdrehfest angeordnet ist. Eine Sperrklinke 5 verhindert ein unbeabsichtigtes Aufrollen bzw. ein Spannen des Schlauchs während der Benutzung.

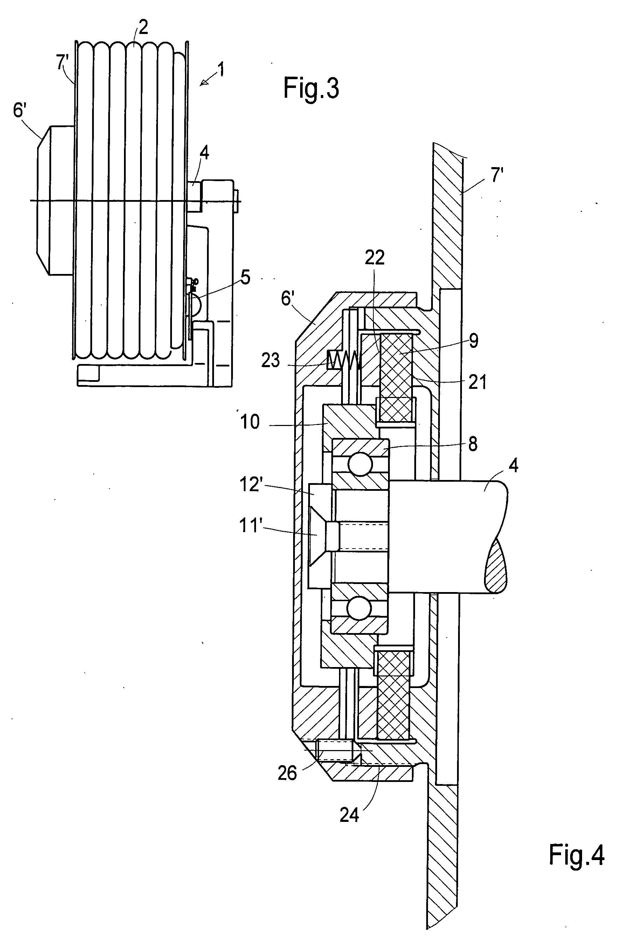

Eine in den Figuren nicht sichtbare Aufrollfeder befindet sich im Inneren der Schlauchhaspel 1 und wirkt zwischen der Schlauchhaspel 1 und der Achse 4. In einem Gehäuse 6 bzw. 6' befindet sich jeweils eine Bremsvorrichtung. Diese sind in den Figuren 3 und 4 näher dargestellt. An einer Seitenscheibe 7 bzw. 7', die auch gleichzeitig der Deckel für die nicht dargestellte Aufrollfeder ist, befindet sich jeweils eine einstellbare Reibungsbremse, die des weiteren über einen Freilauf 8 mit der Achse 4 verbunden ist.

In beiden Ausführungsbeispielen ist eine Reibscheibe 9 mit dem freien Teil des Freilaufs über einen Mitnehmer 10 verbunden. Der Freilauf ist mit Hilfe jeweils einer Schraube 11, 11' und einer Scheibe 12, 12' mit der Welle 4 verbunden.

Zur Erzeugung der Bremskraft steht die Reibscheibe 9 mit jeweils zwei Reibflächen in Berührung. Bei dem Ausführungsbeispiel nach Fig. 2 sind dafür zwei Scheiben 12, 13 vorgesehen, die mit Hilfe von am Umfang verteilten Schrauben 14 und darauf befindlichen Tellerfedern 15 gegen die Reibscheibe gepresst und gleichzeitig mit der Scheibe 7 verbunden werden. Zur Einstellung der Bremskraft ist ein Verdrehen der Muttern und Kontermuttern 17 erforderlich. Ein Deckel 6 bietet unter anderem einen Schutz vor Verletzungen an den hervorstehenden Schrauben.

Bei dem Ausführungsbeispiel nach Fig. 4 wird die eine Reibfläche 21 von einer entsprechenden Ausformung der Scheibe 7' gebildet. Die andere Reibscheibe 22 wird mit Hilfe von am Umfang verteilten Druckfedern 23 an die Reibscheibe 9 gepreßt. Der Bremsdruck wird bei dem Ausführungsbeispiel nach Fig. 4 dadurch eingestellt, daß der auf einem Gewinde 24 gelagerte Deckel 6' gegenüber der Scheibe 7' verdreht wird. Mit Hilfe einer Sicherungsschraube 26 kann der Deckel 6' gegen unbeabsichtigtes Verdrehen gesichert werden. Zur Einstellung der Bremskraft sind bei dem Ausführungsbeispiel nach Fig. 4 weniger Handgriffe erforderlich als bei dem Ausführungsbeispiel nach Fig. 3.

Bei den weiteren Ausführungsbeispielen wird die Schlauchtrommel 33 auf beiden Seiten von je einem Ständer 32 gehalten, die auf einer Grundplatte 31 montiert sind. Mit 34 ist ein Rollenauslauf bezeichnet, der in an sich bekannter Weise auch ein schräges Herausziehen des Schlauchs ermöglicht und beim Aufrollen des Schlauchs für gleichmäßiges Wickeln sorgt. Ein Schlauchpuffer 34', der an beliebiger Stelle auf dem Schlauch angeklemmt werden kann, sorgt dafür, dass das Schlauchende beim Aufrollen am Rollenauslauf 34 gestoppt wird. Der Rollenauslauf 34 ist mit Hilfe von Haltern 35 mit den Ständern verbunden.

Ein Drehgelenk 36 dient zur Verbindung des an der Welle 37 befestigten Schlauchs mit einer Quelle, beispielsweise für Druckluft. Eine Aufrollfeder 39 ist am inneren Ende über ein Lager 38 verdrehfest mit dem Ständer 32 und in nicht dargestellter Weise am äußeren Ende mit der Schlauchtrommel 33 verbunden.

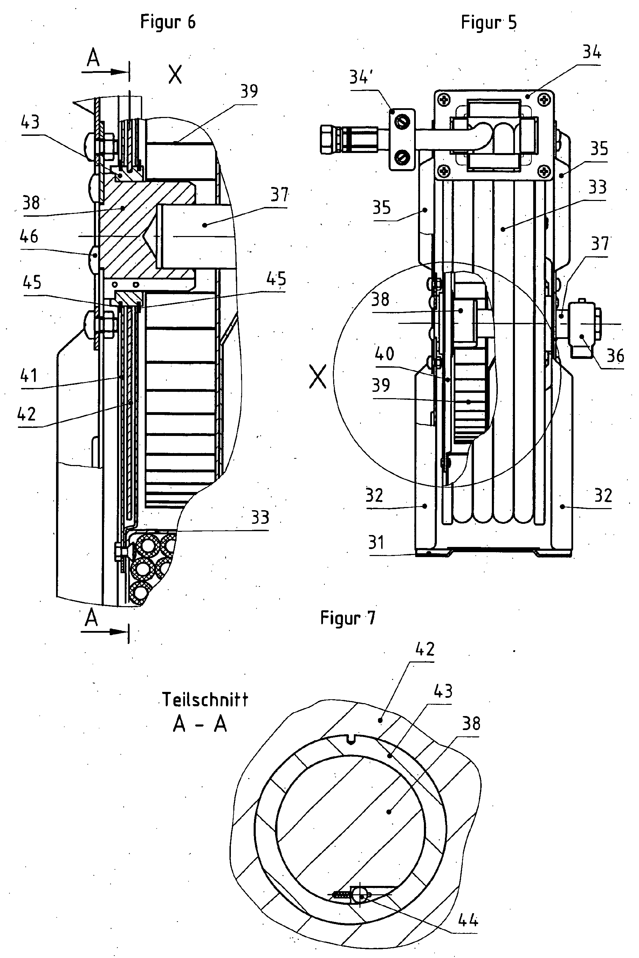

Bei dem Ausführungsbeispiel nach den Figuren 5 bis 7 wirkt eine Viskobremse 40 mit einem flachen scheibenförmigen Gehäuse 41 und einer Bremsscheibe 42 zwischen dem Lager 38 und der Schlauchtrommel 33. Dabei ist das Gehäuse 41 mit der Schlauchtrommel 33 verbunden, während die Bremsscheibe 42 auf einem Mitnehmerring 43 (Fig. 7) verdrehfest gelagert ist, der auf dem Lager 38 drehbar ist, wobei ein Freilauf 44 eine Drehung des Mitnehmerringes 43 auf dem Lager 38 verhindert, wenn der Schlauch durch die Kraft der Feder 39 aufgerollt wird. Das Lager 38 ist mit Hilfe von Schrauben 46 an dem Ständer 42 befestigt. Zum Abdichten des Gehäuses 41 gegenüber dem Mitnehmerring 43 sind Dichtungen 45 vorgesehen.

Der Zwischenraum zwischen dem Gehäuse 41 und der Scheibe 42 ist mit Öl oder Fett gefüllt. Wird der Schlauch auf die Schlauchtrommel aufgerollt, wird die Bremsscheibe 42 durch die Flüssigkeit von dem Gehäuse mitgenommen. Über den Mitnehmerring 43 wird der Freilauf 44 gesperrt. Somit ist die mittlere Scheibe fest mit dem Lager 38 und damit mit dem Ständer 32 verbunden. Zwischen der Bremsscheibe 42 und dem Gehäuse 41 findet jetzt die volle Relativbewegung statt. Da die Scherkräfte der Flüssigkeit mit der Geschwindigkeit linear bei laminarer Strömung zunehmen, ist die Bremswirkung umso größer, je höher die Geschwindigkeit ist. Wird der Schlauch abgerollt, gibt der Freilauf 44 den Mitnehmerring 43 frei, so dass die Bremsscheibe 42 mit der Schlauchtrommel frei rotieren kann und eine Bremswirkung in dieser Richtung nicht stattfindet.

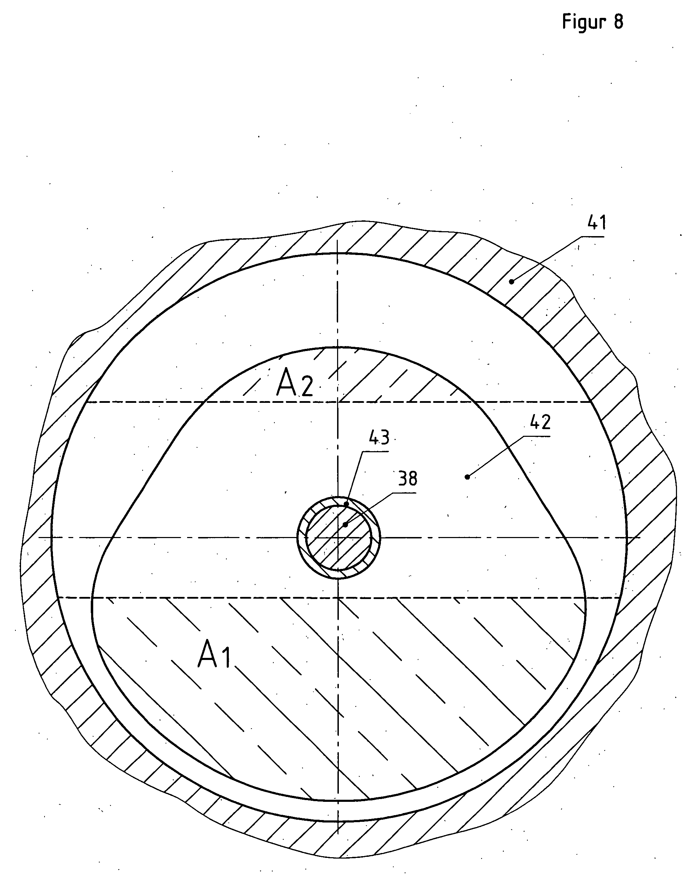

Fig. 8 zeigt einen Querschnitt durch die Viskobremse, deren Scheibe 42 derart geformt ist, dass eine Einstellmöglichkeit der Bremskraft gegeben ist. Damit kann die Viskobremse an verschiedene Viskositäten des verwendeten Öls angepasst werden. Befindet sich der breitere Teil der Scheibe 42 unten, wie es in Fig. 8 dargestellt ist, ergibt sich ein relativ hoher Ölstand, so dass die Scheibe 42 auf einer relativ großen Fläche A1 mit dem Öl benetzt wird. Es ergibt sich eine im Verhältnis zur Viskosität des Öls große Bremskraft.

Befindet sich der kleinere Teil der Scheibe 42 unten, so wird durch die Scheibe 42 wesentlich weniger Öl verdrängt, so dass der Ölstand niedriger ist und auch nur eine kleinere Fläche A2 der Scheibe 42 benetzt wird. Dieser Fall ist in Fig. 8 auf dem Kopf stehend dargestellt. Im Verhältnis zur hohen Viskosität des dickflüssigen Öls kommt hierbei eine geringere Bremskraft zur Wirkung.

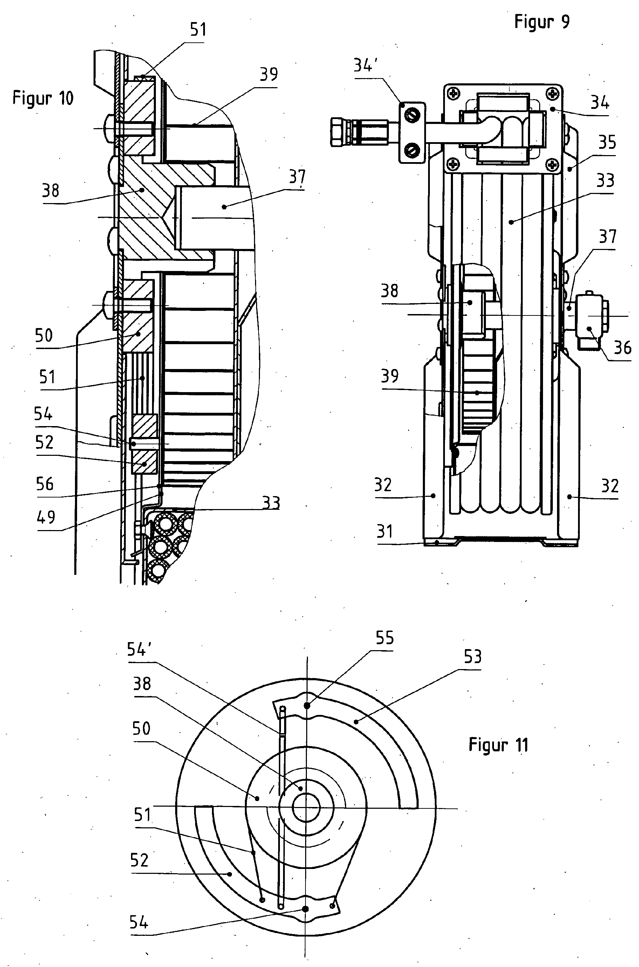

Bei dem in den Figuren 9 bis 11 dargestellten Ausführungsbeispiel wird die Aufrollgeschwindigkeit durch eine fliehkraft-betätigte Bandbremse begrenzt, die als Differenzialbandbremse ausgebildet ist. Diese besteht aus einer verdrehfest angeordneten Bremstrommel 50, einem Bremsband 51, zwei Fliehgewichten 52, 53 und einer Koppelstange 54'. Die Fliehgewichte 52, 53 sind jeweils auf einem Bolzen 54, 55 drehbar gelagert. Die Bolzen 54, 55 stehen auf einer Scheibe 56, die an der Schlauchtrommel 33 befestigt ist und einen Abschluss des Gehäuses für die Feder 39 bildet. Die übrigen nicht erläuterten Teile entsprechen denjenigen des Ausführungsbeispiels nach den Figuren 5 bis 8.

Durch die Ausbildung als Differenzialbandbremse wird eine große Verstärkung der von den Fliehgewichten erzeugten Kraft erzielt. Es lassen sich somit durch kleine Betätigungskräfte große Bremskräfte erzeugen. Durch die Kopplung zweier entgegengesetzter Fliehgewichte 52, 53 mit Hilfe der Koppelstange 54' werden Einwirkungen der Schwerkraft verhindert. In Abrollrichtung ist das Bremsmoment deutlich geringer als beim Aufrollen.

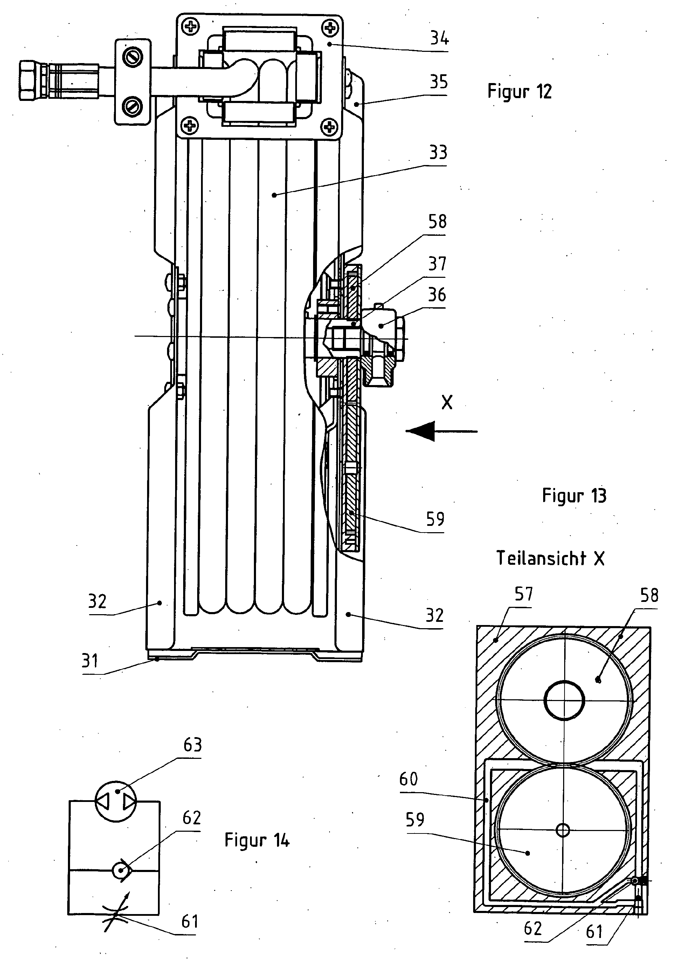

Bei dem in den Figuren 12 bis 14 dargestellten Ausführungsbeispiel wird die Bremswirkung mit Hilfe einer Zahnradpumpe hergestellt. Dazu ist an den bereits beschriebenen Schlauchaufroller ein flaches Gehäuse 57 angebaut, in dem zwei miteinander im Eingriff stehende Zahnräder 58, 59 vorgesehen sind. Dabei ist das Zahnrad 58 verdrehfest auf der Welle 37 angeordnet. Bei Drehung des Zahnrades 58, welches dann auch das Zahnrad 59 antreibt, wird ein Flüssigkeitsstrom in einem Kanal 60 erzeugt. Eine einstellbare Drossel 61 erhöht den Strömungswiderstand im Kanal 60. Damit lässt sich die Bremskraft stufenlos einstellen. Ein Rückschlagventil 62 gibt die Strömung im Kanal 60 in der Abrollrichtung frei.

Fig. 14 zeigt ein hydraulisches Schaltbild des Ausführungsbeispiels mit der Zahnradpumpe 63, dem Rückschlagventil 62 und der Drossel 61. Das entstehende Bremsmoment ist umso größer, je größer die Umdrehungsfrequenz der Trommel ist.

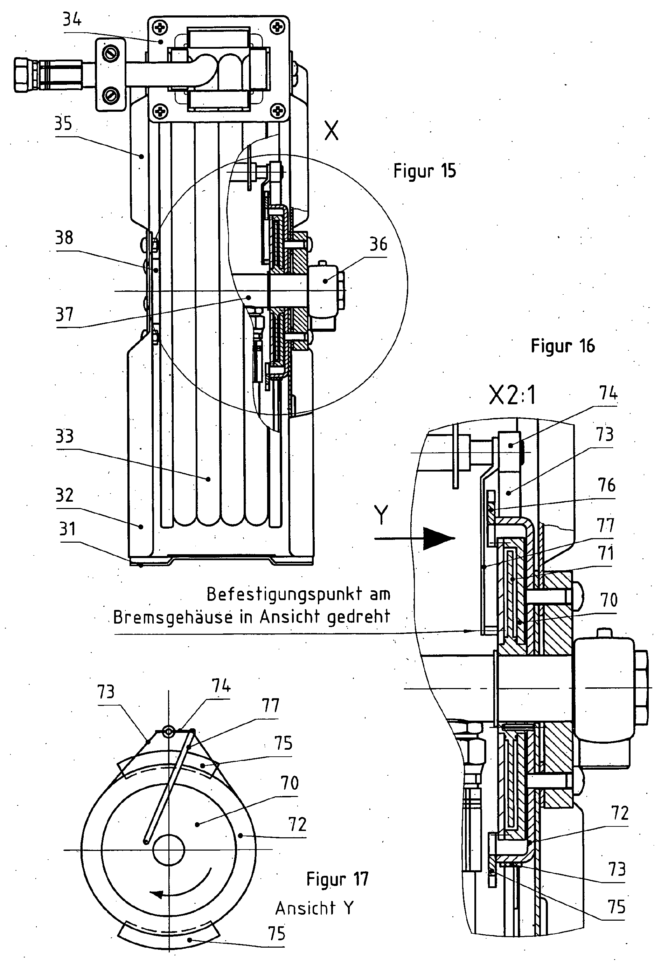

Die Figuren 15 bis 17 stellen ein Ausführungsbeispiel mit einer Differenzialbandbremse dar, die visko-betätigt ist. Sie besteht aus einer Kombination einer Viskokupplung mit einem Gehäuse 70 und einer inneren Scheibe 71 und einer Bandbremse. Diese besteht wiederum aus einer Bremstrommel 72, einem Bremsband 73 und einem Bremshebel 74. Über eine Schubstange 77 ist das Gehäuse 70 der Viskokupplung mit dem Bremshebel 74 verbunden. Rastsegmente 75, 76 sind am Umfang der Bremstrommel 72 angeordnet und wirken mit einer nicht dargestellten Sperrklinke zusammen, um ein unbeabsichtigtes Aufrollen des Schlauchs zu verhindern.

Die innere Scheibe 71 der Viskokupplung wird über einen Innenring und eine Passfeder von der sich drehenden Achse der Schlauchtrommel angetrieben. Das Gehäuse 70 wird durch das im Zwischenraum befindliche Öl mitgenommen. Der Bremshebel 74 wird über die Schubstange 77, die am Bremshebel und an dem Gehäuse 70 befestigt ist, betätigt. Das Bremsband 73 der Differenzialbandbremse liegt auf einer um die Viskokupplung greifenden Bremstrommel. An dieser Bremstrommel sind Rastersegmente 75, 76 zur Arretierung der Trommel angebracht. Die Bremskraft ist geschwindigkeitsabhängig. Die Differenzialbandbremse wird in Aufrollrichtung (Pfeil in Fig. 17) angezogen, so dass der mit der Erfindung angestrebte Bremseffekt eintritt, während in Abrollrichtung das Bremsband 73 gelockert wird, so dass sich der Schlauch leicht abrollen lässt.

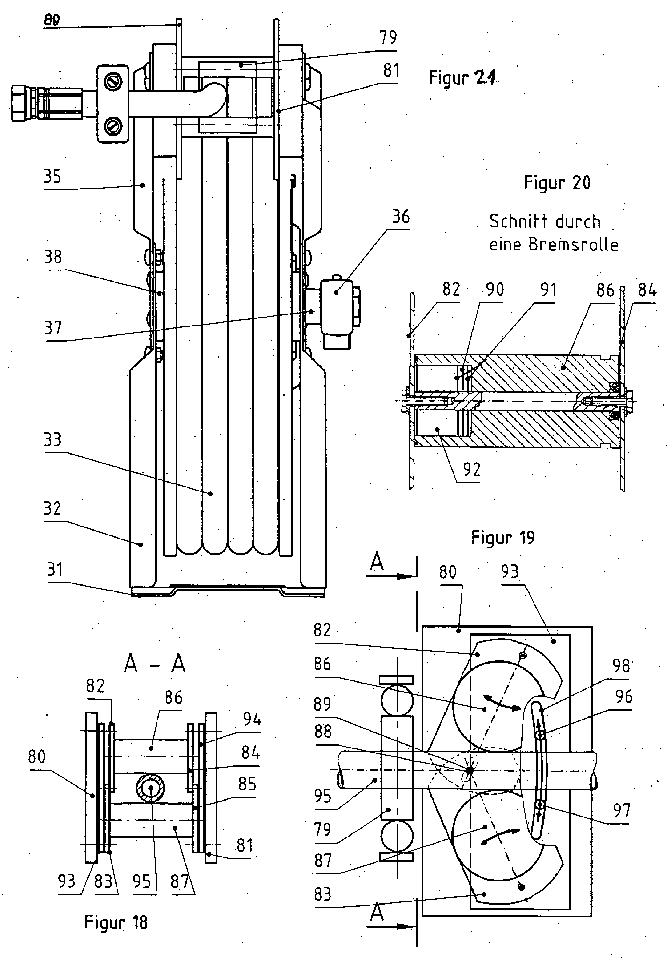

Bei dem in den Figuren 18 bis 21 gezeigten Ausführungsbeispiel greift eine Bremse direkt am Schlauch an und ist zwischen dem Rollenauslauf 79 und der Schlauchtrommel 33 angeordnet. Auf zwei zueinander parallel stehenden Halteblechen 80, 81 sind insgesamt vier Blecharme 82 bis 85 in Richtung der Doppelpfeile schwenkbar angeordnet, die paarweise jeweils eine Bremsrolle 86, 87 tragen.

Damit die Blecharme 82 bis 85 in gleicher Weise geschwenkt werden, sind die Blecharme mit Hilfe eines in einem der Blecharme angeordneten Langloches 88 und eines in dem anderen Blecharm angeordneten Stiftes 89 miteinander verbunden.

Fig. 20 zeigt einen Schnitt durch eine der Bremsrollen 86, die mit Hilfe entsprechender Befestigungsmittel und einer Achse drehbar in den Blecharmen 82, 84 gelagert ist. In die Bremsrolle 86 ist eine Viskobremse eingebaut, von der lediglich eine rotierende Bremsscheibe 90 und zwei feststehende Bremsscheiben 91 dargestellt sind. Die Bremskammer 92 ist mit Öl gefüllt.

Wird der Schlauch aufgerollt, so ziehen sich die Bremsrollen 86, 87 ähnlich einer Klampe zusammen und werden dadurch an den Schlauch angepresst, so dass sie vom Schlauch angetrieben werden und die Bremswirkung entfalten. Beim Abrollen des Schlauchs streben sie auseinander, so dass der Schlauch 95 lose zwischen den Bremsrollen 86, 87 verläuft.

Zur Anpassung an den sich mit dem Wickeldurchmesser ändernden Winkel des Schlauchs sind die Blecharme 82 bis 85 auf einem Wiegenblech 93, 94 montiert, das mittels je eines Langlochs 98 im Wiegenblech 93 und - nicht dargestellt - im Wiegenblech 94 eine Kippbewegung ausführen kann, die mit Hilfe zweier Stifte 96, 97 dem Schlauch 95 folgt.

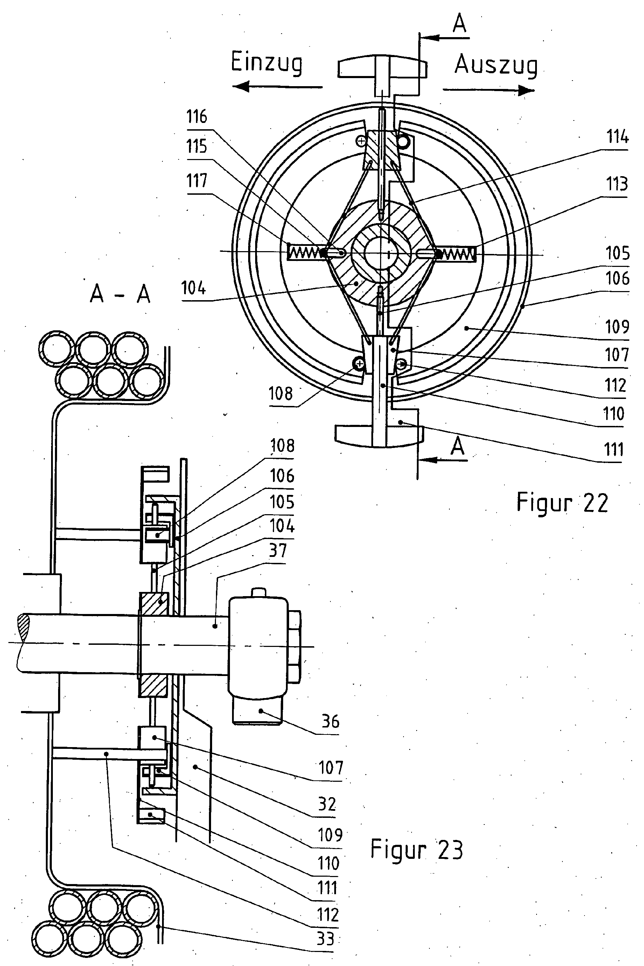

Bei dem in den Figuren 22 und 23 gezeigten Ausführungsbeispiel ist die Bremse eine zweiteilige Backenbremse, deren Bremsmechanismus 104, 105 und 107 bis 117 mit der Schlauchtrommel umläuft, da die beiden Bremsbacken 109 mit je einem Bolzen 112, der gleichzeitig das Festlager einer Backe bildet, mit der Schlauchtrommel 33 fest verbunden sind und die übrigen Teile des Bremsmechanismus von den Bremsbacken durch Formschluss mitgenommen werden.

Die Bremstrommel 106 steht fest und ist mit dem Ständer 32 verbunden. Zwei innerhalb der Bremstrommel 106 angeordnete halbkreisförmige Bremsbacken 109 sind mit je einem Festlager 112, auf dem sie drehbar gelagert sind, und je einem Loslager 108 so angeordnet, dass sie in Drehrichtung des Schlaucheinzugs als auflaufende Bremsbacken wirken, in umgekehrter Drehrichtung als ablaufende. Hierauf beruht die unterschiedliche Bremswirkung bei Schlauchein- und -auszug.

An einem lose auf der Welle 37 gelagerten Ring 104 sind zwei um 180° versetzte Führungsstangen 105 befestigt. Auf diesen ist jeweils ein Keil 107 verschiebbar angeordnet, der jeweils zwischen dem Festlager 112 der einen und dem Loslager 108 der anderen Bremsbacke eingreift. Beide Keile sind nach außen hin mit je einem Fliehgewicht 111, das die Masse des Keils vergrößert, starr durch einen Gewichtsausleger 110 verbunden.

Beide Keile sind symmetrisch durch vier gelenkig gelagerte Koppelstangen 114 verbunden, um Schwerkrafteinflüsse zu neutralisieren. An der gelenkigen Verbindung 115 von je zwei Koppelstangen, die in der Nut 116 linear geführt wird, greift jeweils von außen eine Zugfeder 113 an. Diese ist über den Federausleger 117 mit dem Ring 104 verbunden. Mittels dieser Federn werden die Keile und Fliehgewichte bei Stillstand des Schlauchaufrollers wieder in ihre Ausgangsposition zurückgeholt.

Die Wirkungsweise der Bremse ist zweifach. 1. Bei Rotation der Schlauchtrommel und des mitdrehenden Bremssystems treten Fliehkräfte auf, mit deren Hilfe die Keile die beiden Bremsbacken spreizen. Die nunmehr an der Innenseite der Bremstrommel 106 anliegenden Bremsbacken erzeugen die gewünschte, von der Drehzahl abhängige Bremswirkung. 2. Zu Beginn der Rotation erfolgt durch die Masseträgheit des Systems aus Ring-, Keil- und Fliehgewicht, welches eine Relativbewegung zu den Bremsbacken ausführt, da es auf der Welle frei drehbar ist. Es entsteht dabei ein Moment, das auf die Loslager der Bremsbacken wirkt. Dadurch werden die Bremsbacken bereits an die Bremstronmmel gedrückt, bevor die Fliehkräfte voll entwickelt sind.

## Patentansprüche

1. Aufroller für wickelfähige Objekte mit einer das Objekt aufnehmenden Trommel, wobei das ausgezogene Objekt durch Federkraft nach Aufhebung einer Sperre automatisch aufgerollt wird, **dadurch gekennzeichnet, dass** eine richtungsabhängige Bremsvorrichtung (9, 12, 13; 9, 21, 22; 41, 42; 50 bis 55; 57 bis 62; 70 bis 77; 80 bis 92; 104 bis 114) derart vorgesehen ist, dass die Bremswirkung beim Aufrollen des Objekts größer als beim Abrollen ist.

2. Aufroller nach Anspruch 1, **dadurch gekennzeichnet, dass** die Bremsvorrichtung (9, 12, 13; 9, 21, 22; 41, 42; 50 bis 55; 57 bis 62; 70 bis 77; 104 bis 114) zwischen einer festen Halterung (3, 4; 32, 38) für die Trommel (1; 33) und der Trommel (1; 33) wirksam ist.

3. Aufroller nach Anspruch 2, **dadurch gekennzeichnet, dass** an der festen Lagerung (3, 4; 32, 38) ein Freilauf (8; 43, 44) angeordnet ist mit einem festen und einem in einer Richtung drehbaren Teil (43), dessen drehbarer Teil (43) mit der Bremse (9, 12, 13; 9, 21, 22; 41, 42) verbunden ist.

4. Aufroller nach Anspruch 3, **dadurch gekennzeichnet, dass** die Bremse eine Reibungsbremse (9, 12, 13; 9, 21, 22) mit einer einstellbaren Bremskraft ist.

5. Aufroller nach Anspruch 4, **dadurch gekennzeichnet, dass** die Reibungsbremse aus einer Bremsscheibe (9) und aus mit Hilfe von Federn (15; 23) angepressten Bremsbacken (12, 13; 21, 22) besteht.

6. Aufroller nach Anspruch 5, **dadurch gekennzeichnet, dass** der Andruck der Bremsbacken (12, 13) mit mehreren am Umfang angeordneten Schrauben (14) und Muttern (17) einstellbar ist.

7. Aufroller nach Anspruch 5, **dadurch gekennzeichnet, dass** zur Einstellung der Bremskraft ein zylinderförmiges Gehäuse geteilt ist, wobei die Teilung mit einem Gewinde (24) erfolgt und das deckelförmige eine Teil (6') gegenüber dem anderen radial durch Drehung verstellbar ist und als Widerlager für die Federn (23) dient.

8. Aufroller nach Anspruch 2, **dadurch gekennzeichnet, dass** die Bremsvorrichtung eine Viskobremse (41, 42) ist.

9. Aufroller nach Anspruch 8, **dadurch gekennzeichnet, dass** ein scheibenförmiges Gehäuse (41) an seinem Umfang mit der Trommel (33) verbunden, mit Flüssigkeit gefüllt und im mittleren Bereich gegenüber einem ringförmigen Freilauf (43) drehbar abgedichtet ist und dass eine im Gehäuse (41) verlaufende Bremsscheibe (42) verdrehfest am Freilauf (43) befestigt ist.

10. Aufroller nach einem der Ansprüche 8 bis 9, **dadurch gekennzeichnet, dass** die Bremsscheibe (42) asymmetrisch ausgebildet ist und dass ihre Drehstellung einstellbar ist.

11. Aufroller nach Anspruch 8, **dadurch gekennzeichnet, dass** ein scheibenförmiges Gehäuse an der festen Halterung befestigt und mit Flüssigkeit gefüllt ist und dass eine im Gehäuse verlaufende Bremsscheibe über eine gemeinsame Welle mit der Trommel verbunden ist.

12. Aufroller nach Anspruch 2, **dadurch gekennzeichnet, dass** die Bremsvorrichtung eine fliehkraft-betätigte Bandbremse (50 bis 55) ist.

13. Aufroller nach Anspruch 12, **dadurch gekennzeichnet, dass** die Bandbremse eine Differenzialbandbremse (50 bis 55) ist, wobei zwei jeweils als Hebel ausgebildete Fliehgewichte (52, 53) mit einer Koppelstange (54') verbunden sind und an einem der Fliehgewichte (52) im unterschiedlichen Abstand zu einem Drehpunkt (54) die Enden eines Bremsbandes (51) befestigt sind.

14. Aufroller nach Anspruch 2, **dadurch gekennzeichnet, dass** die Bremsvorrichtung eine Zahnradpumpe (57 bis 59) ist mit einem Flüssigkeitskreislauf (60), dessen Strömungswiderstand mit einer Drossel (61) einstellbar ist, und dass parallel zur Drossel (61) ein Rückschlagventil (62) vorgesehen ist.

15. Aufroller nach Anspruch 2, **dadurch gekennzeichnet, dass** die Bremsvorrichtung eine visko-betätigte Bandbremse (70 bis 77) ist.

16. Aufroller nach Anspruch 15, **dadurch gekennzeichnet, dass** ein scheibenförmiges Gehäuse (70) über einen Exzenter und eine Schubstange (77) mit dem Bremshebel (74) einer Bandbremse (72, 73) verbunden und mit Flüssigkeit gefüllt ist.

17. Aufroller nach Anspruch 2, **dadurch gekennzeichnet, dass** die Bremsvorrichtung (104 bis 114) mindestens zwei rotierende Fliehgewichte (111) aufweist, welche mit Bremselementen (109) derart verbunden sind, dass eine Bremskraft in Abhängigkeit von der Drehgeschwindigkeit und der Drehbeschleunigung erzeugt wird.

18. Aufroller nach Anspruch 17, **dadurch gekennzeichnet, dass** die Bremselemente Bremsbacken (109) sind.

19. Aufroller nach einem der Ansprüche 17 oder 18, **dadurch gekennzeichnet, dass** von mindestens zwei am Umfang verteilten Bremselementen (109) zwei sich gegenüberstehende Lager (108, 112) zweier benachbarter Bremselemente (109) derart ausgebildet sind, dass ein Lager ein Festlager (112) und das andere ein Loslager (108) ist und dass zwischen den Lagern (108, 112) ein Keil (107) angeordnet ist, der mit dem jeweiligen Fliehgewicht (111) radial und tangential verschiebbar ist.

20. Aufroller nach Anspruch 19, **dadurch gekennzeichnet, dass** die Fliehgewichte (111) auf jeweils einer radialen Führung (105) angeordnet sind und von Federn (113) in Richtung auf die Achse gezogen werden.

21. Aufroller nach Anspruch 20, **dadurch gekennzeichnet, dass** zum Zurückziehen von zwei diametral entgegengesetzten Fliehgewichten (111) ein aus zwei Kniehebeln bestehendes Gestänge vorgesehen ist, wobei am Gelenk (115) zwischen zwei jeweils einen Kniehebel bildenden Stangen (114) je eine Feder (113) angreift.

22. Aufroller nach einem der Ansprüche 20 oder 21, **dadurch gekennzeichnet, dass** die Fliehgewichte (111) außerhalb der Bremstrommel (106) angeordnet sind.

23. Aufroller nach Anspruch 1, **dadurch gekennzeichnet, dass** die Bremsvorrichtung von zwei das Objekt (95) umfassenden Bremsrollen (86, 87) gebildet ist, deren Achsen derart schwenkbar angeordnet sind, dass beim Aufrollen des Objekts (95) die Bremsrollen (86, 87) gegen das Objekt (95) gedrückt und beim Abrollen freigegeben werden und dass die Bremsrollen (86, 87) jeweils eine Bremse (90, 91, 92) aufweisen.

24. Aufroller nach Anspruch 23, **dadurch gekennzeichnet, dass** die Bremsen Viskobremsen (90, 91, 92) sind.

25. Aufroller nach einem der Ansprüche 23 oder 24, **dadurch gekennzeichnet, dass** die Bremsrollen (86, 87) jeweils auf zwei Blecharmen (82, 83; 84, 85) montiert sind, die durch eine Stift/Langlochverbindung (88, 89) derart gekoppelt sind, dass sie jeweils den gleichen Winkel zum Objekt (95) bilden.

26. Aufroller nach einem der Ansprüche 23 bis 25, **dadurch gekennzeichnet, dass** die Bremsvorrichtung (80 bis 98) zur Anpassung an den Füllzustand der Trommel (33) kippbar gelagert ist.
